# FASCICULE DE BREVET EUROPEEN

(11) **EP 4 230 394 B1**
(45) Date de publication et mention de la délivrance du brevet: **04.12.2024**
(21) Numéro de dépôt: 23155704.2
(22) Date de dépôt: 09.02.2023
(51) Int. Cl.: B29D 99/00, B29C 70/46, B29C 70/54

(54) **PROCÉDÉ ET OUTILLAGE DE FABRICATION D'AU MOINS UNE PARTIE D'UNE STRUCTURE EN CAISSON D'UN AÉRONEF COMPORTANT UNE ÉTAPE DE FORMAGE ET CAISSON CENTRAL DE VOILURE AINSI OBTENU**
VERFAHREN UND VORRICHTUNG ZUR HERSTELLUNG MINDESTENS EINES TEILS EINER BOXSTRUKTUR EINES LUFTFAHRZEUGS, DAS EINE FORMGEBUNGSSTUFE UMFASST, UND SO ERHALTENER ZENTRALFLÜGELKASTEN
METHOD AND APPARATUS FOR MANUFACTURING AT LEAST A PORTION OF A BOX STRUCTURE OF AN AIRCRAFT COMPRISING A FORMING STEP AND CENTRAL WING BOX OBTAINED THEREBY

(30) Priorité: 22.02.2022 FR 2201536
(43) Date de publication de la demande: 23.08.2023
(73) Titulaire: AIRBUS OPERATIONS (S.A.S.), 31060 Toulouse (FR); Airbus Operations Ltd., Filton, Bristol BS99 7AR (GB); Airbus Operations S.L., 28906 Getafe (Madrid) (ES)
(72) Inventeur: DUTHILLE, Bertrand, 31060 TOULOUSE (FR); PRICE, Jonathan, BRISTOL, BS99 7AR (GB); PRIDIE, Jago, 31060 TOULOUSE (FR); MENENDEZ MARTIN, Jose Manuel, 28906 GETAFE (ES)
(74) Mandataire: Fantin, Laurent

(56) Documents cités:
- EP-A1- 3 115 185
- EP-A1- 3 530 444
- EP-A1- 3 666 507
- WO-A2-2008/020158

## Description

La présente demande se rapporte à un procédé de fabrication d'au moins une partie d'une structure en caisson d'un aéronef comportant une étape de formage ainsi qu'à un caisson central de voilure ainsi obtenu.

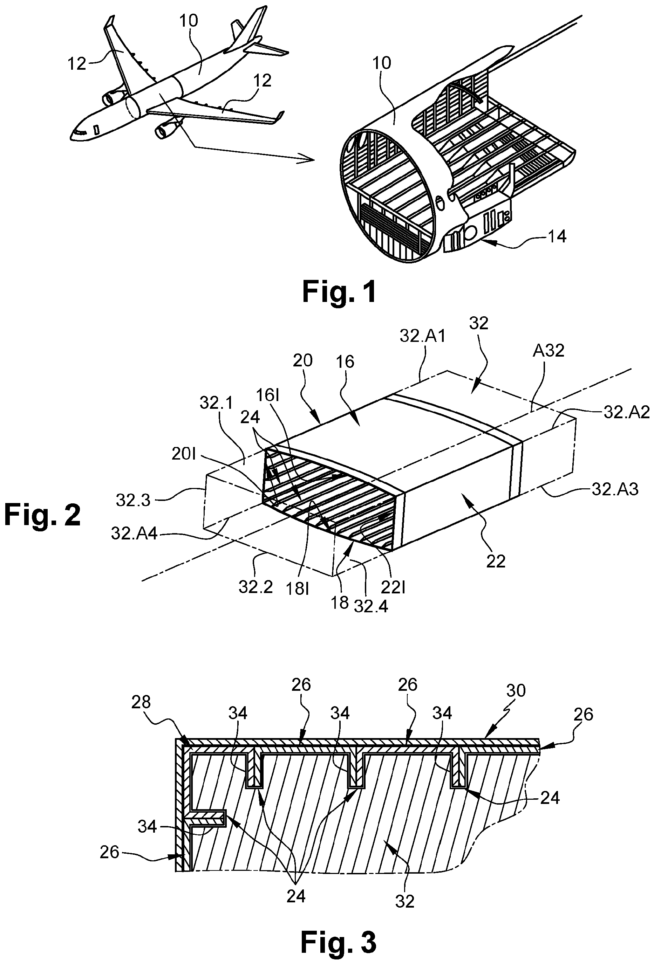

Comme illustré sur la figure 1, un aéronef comprend un fuselage 10, des ailes 12 ainsi qu'un caisson central de voilure 14 reliant les ailes 12 et le fuselage 10. Selon un mode de réalisation illustré sur la figure 2, le caisson central de voilure 14 comprend un panneau supérieur 16, un panneau inférieur 18, un longeron avant 20 et un longeron arrière 22.

Les panneaux supérieur et inférieur 16, 18 ainsi que les longerons avant et arrière 20, 22 présentent chacun une face interne (orientée vers le centre du caisson central voilure) référencée respectivement 16I, 181, 20I et 221 et sont renforcés, au niveau de leur face interne, par des raidisseurs 24.

Comme illustré sur la figure 3, le caisson central de voilure 14 est obtenu à partir d'une pluralité de profilés en U ou en C 26, 28, en matériau composite, et d'une peau externe 30 de renforts fibreux rapportée sur les profilés 26, 28. La pluralité de profilés en U ou en C 26, 28 sont positionnés autour d'un moule 32 (visible sur la figure 2 en trait mixte et en partie sur la figure 3).

Le moule 32 comprend quatre faces 32.1 à 32.4 reliées, deux à deux, au niveau de quatre arêtes 32.A1 à 32.A4, conformées de la même manière que les faces internes 16I, 18I, 20I et 22I des panneaux supérieur et inférieur 16, 18 ainsi que des longerons avant et arrière 20, 22 du caisson central de voilure 14. Selon une configuration, le moule 32 présente un axe de pivotement A32, parallèle aux arêtes 32.A1 à 32.A4, pour permettre un enroulement des renforts fibreux.

Le moule 32 comprend des rainures 34 parallèles aux arêtes 32.A1 à 32.A4 et ménagées au niveau des faces 32.1 à 32.4 du moule 32, une rainure 34 pour chaque raidisseur 24.

Un procédé de fabrication d'un caisson central de voilure 14 comprend une étape d'obtention des profilés 26, 28, une étape de positionnement desdits profilés 26, 28 sur le moule 32, une étape d'obtention de la peau externe 30 en enroulant des renforts fibreux autour du moule 32, une étape de mise en place d'un habillage de polymérisation, une étape de polymérisation ainsi qu'une étape de démoulage.

L'étape d'obtention de la peau externe 30 par enroulement de renforts fibreux est relativement longue et impacte fortement les coûts de production du caisson central de voilure 14.

Le document WO2008020158 propose également un procédé de fabrication d'un caisson central de voilure. EP 3 530 444 A1 divulgue les caractéristiques du préambule de la revendication 1.

Selon un premier mode de réalisation illustré sur les figures 1 à 3, le caisson central de voilure est réalisé en assemblant quatre parties. Selon ce premier mode de réalisation, pour obtenir un panneau raidi, un outillage comprend un moule principal comportant des formes en creux configurées pour recevoir des moules secondaires dans lesquels sont positionnés des profilés de fibres en T ou en L. Après la mise en place des moules secondaires contenant les profilés de fibres sur le moule principal, la peau externe est obtenue en déposant une préforme plane sur le moule principal. Enfin, la préforme plane est recouverte d'un contre-moule configuré pour plaquer la préforme plane contre le moule principal lors d'une étape de polymérisation. Selon une configuration, le panneau raidi comprend deux rebords pliés à 90° de part et d'autre de sa partie centrale pourvue de raidisseurs. Selon cette configuration, le moule principal comprend deux flancs conformés comme les rebords du panneau raidi à obtenir et le contre-moule présente une forme en U pour déformer la préforme plane de manière à ce qu'elle épouse les formes du moule principal. Ce premier mode de réalisation n'est pas satisfaisant car, la partie centrale de la préforme n'étant pas maintenue lorsque ses rebords sont pliés, il n'est pas possible d'utiliser ce premier mode de réalisation pour obtenir un panneau raidi avec un seul rebord.

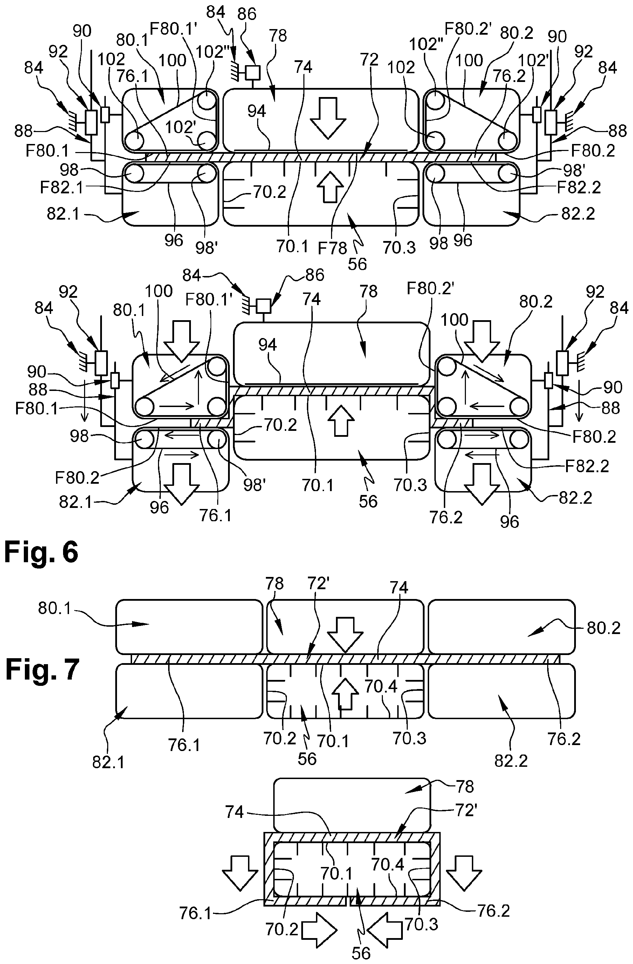

Selon un deuxième mode de réalisation visible sur la figure 6, pour obtenir une peau externe continue, l'outillage comprend un moule principal comprenant quatre faces pourvues de formes en creux configurées pour recevoir des moules secondaires dans lesquels sont positionnés des profilés de fibres. Après la mise en place des moules secondaires contenant les profilés de fibres sur le moule principal, la peau externe est obtenue par enroulement de renforts fibreux autour du moule principal. Même si ce deuxième mode de réalisation permet de supprimer les étapes d'assemblage, il n'est pas satisfaisant car, comme indiqué précédemment, cette étape d'enroulement de renforts fibreux est relativement longue et impacte fortement les coûts de production du caisson central de voilure.

La présente invention vise à remédier à tout ou partie des inconvénients de l'art antérieur.

A cet effet, l'invention a pour objet un procédé de fabrication d'au moins une partie d'une structure en caisson comportant au moins une paroi principale raidie prolongée par au moins un rebord et/ou par au moins une paroi secondaire raidie, ladite partie de structure en caisson étant obtenue à partir d'une peau externe en matériau composite et d'une pluralité de profilés en matériau composite présentant chacun une face de jonction en contact avec la peau externe ; ledit procédé comprenant une étape d'obtention des profilés, une étape de positionnement desdits profilés sur un moule comportant au moins une première face au niveau de laquelle sont positionnés les profilés, une étape d'obtention d'une préforme de fibres plane présentant une épaisseur sensiblement égale à la peau externe, une étape de pose d'une partie centrale de la préforme de fibres sur les profilés positionnés sur la première face du moule, la préforme de fibres présentant au moins une extension latérale dans le prolongement de la partie centrale, une étape de formage de l'extension latérale, une étape de mise en place d'au moins un habillage de polymérisation, au moins une étape de polymérisation ainsi qu'au moins une étape de démoulage.

Selon l'invention, lors de l'étape de formage, la partie principale est maintenue plaquée contre les faces de jonction des profilés positionnés sur la première face du moule par un mors principal. En complément, l'extension latérale de la préforme de fibres est rabattue contre une surface de formage, sensiblement perpendiculaire à la première face du moule grâce à au moins un mors secondaire configuré pour se translater parallèlement à la surface de formage. Le fait de réaliser la peau externe à partir d'une préforme de fibres plane puis déformée lors d'une étape de formage permet de réduire les coûts de production et d'augmenter les cadences de production. Selon un autre avantage, le procédé de l'invention peut permettre d'obtenir des panneaux raidis avec un seul rebord ou une seule paroi secondaire raidie. Il permet également d'optimiser le contact entre les faces de jonction des profilés et la préforme de fibres.

Selon une autre caractéristique, lors de l'étape de formage, l'extension latérale de la préforme de fibres est maintenue entre une paire de mors secondaires configurée pour se translater selon au moins une direction parallèle à la surface de formage.

Selon une autre caractéristique, la préforme de fibres comprend des extensions latérales droite et gauche, positionnées de part et d'autre de la partie principale.

Selon une autre caractéristique, la surface de formage correspond à des faces de jonction de profilés positionnés sur une face latérale du moule.

L'invention a également pour objet un procédé de fabrication d'un caisson central de voilure comportant un panneau supérieur, un panneau inférieur, un longeron avant et un longeron arrière, caractérisé en ce que le caisson central de voilure comprend :
- une première partie comportant le panneau supérieur, les longerons avant et arrière ainsi que des première et deuxième ailes, la première aile étant reliée au longeron avant, approximativement perpendiculaire audit longeron avant et le prolongeant en direction opposée du longeron arrière, la deuxième aile étant reliée au longeron arrière, approximativement perpendiculaire audit longeron arrière et le prolongeant en direction opposée du longeron avant, ladite première partie étant obtenue à partir du procédé selon l'une des caractéristiques précédentes,
- une deuxième partie comportant un panneau raidi conformé comme le panneau inférieur et comprenant des première et deuxième extensions disposées de part et d'autre du panneau inférieur, la première extension étant reliée à la première aile, la deuxième extension étant reliée à la deuxième aile.

L'invention a également pour objet un caisson central de voilure obtenu à partir du procédé de fabrication ainsi qu'un outillage de formage permettant de fabriquer au moins une partie d'une structure en caisson comportant au moins une paroi principale raidie prolongée par au moins un rebord et/ou par au moins une paroi secondaire raidie. Cet outillage se caractérise en ce qu'il comprend :
- un moule présentant au moins une première face conformée comme la paroi principale raidie et configurée pour supporter des profilés,
- au moins un mors principal comprenant une face de contact sensiblement parallèle à la première face du moule, configuré pour maintenir plaquée une partie principale d'une préforme de fibres contre des profilés positionnés sur la première face du moule,
- au moins un mors secondaire (80.1, 80.2, 82.12, 82.2) configuré pour rabattre une extension latérale (76.1, 76.2) de la préforme de fibres (72, 72') contre une surface de formage et se déplacer selon au moins une direction parallèle à la surface de formage.

Selon une autre caractéristique, l'outillage de formage comprend au moins une paire de mors secondaires amont et aval configurés pour maintenir chacun une extension latérale de la préforme de fibres et se déplacer selon la direction parallèle à la surface de formage.

Selon une autre caractéristique, chaque mors secondaire amont et aval comprend une première face de contact, les premières faces de contact des mors secondaires amont et aval étant configurées pour être disposées de part et d'autre de la préforme de fibres, sensiblement parallèles entre elles pour chaque paire et perpendiculaires à une face du moule contre laquelle l'extension latérale maintenue par les mors secondaires amont et aval doit être positionnée.

Selon une autre caractéristique, chaque mors secondaire amont comprend une deuxième face de contact orientée vers le moule, sensiblement parallèle à la face du moule contre laquelle l'extension latérale maintenue par les mors secondaires amont et aval doit être positionnée, en fonctionnement la deuxième face de contact étant espacée des profilés positionnés sur ladite face du moule d'une distance sensiblement égale à l'épaisseur de la préforme de fibres. Selon une autre caractéristique, chaque mors secondaire aval comprend, au niveau de sa première face de contact, au moins une bande défilante.

Selon une autre caractéristique, chaque mors secondaire amont comprend, au niveau de sa première et/ou deuxième face de contact, au moins une bande défilante.

Selon une autre caractéristique, chaque mors secondaire amont comprend une bande défilante tendue entre au moins trois cylindres pivotants agencés de manière à ce que la bande défilante défile au droit des première et deuxième faces de contact.

Selon une autre caractéristique, l'outillage comprend une première paire de mors secondaires configurés pour coopérer avec une extension latérale droite de la préforme de fibres ainsi qu'une deuxième paire de mors secondaires configurés pour coopérer avec une extension latérale gauche de la préforme de fibres.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'un caisson central de voilure et d'un moule illustrant un mode de réalisation de l'art antérieur,
- La figure 3 est une coupe longitudinale du caisson central de voilure visible sur la figure 2,
- La figure 4 est une représentation schématique d'un caisson central de voilure illustrant un mode de réalisation de l'invention,
- La figure 5 est une représentation schématique des différentes étapes de mise en place d'une peau externe illustrant un mode de réalisation de l'invention,
- La figure 6 est une représentation schématique des différentes étapes de mise en place d'une peau externe illustrant un autre mode de réalisation de l'invention,
- La figure 7 est une représentation schématique des différentes étapes de mise en place d'une peau externe illustrant un autre mode de réalisation de l'invention,
- La figure 8 est une représentation schématique des différentes étapes de mise en place d'une peau externe illustrant un autre mode de réalisation de l'invention,
- La figure 9 est une coupe d'un panneau raidi obtenu à partir du mode de réalisation visible sur la figure 8,
- La figure 10 est une représentation schématique des différentes étapes de mise en place d'une peau externe illustrant un autre mode de réalisation de l'invention,
- La figure 11 est une coupe d'un panneau raidi obtenu à partir du mode de réalisation visible sur la figure 10.

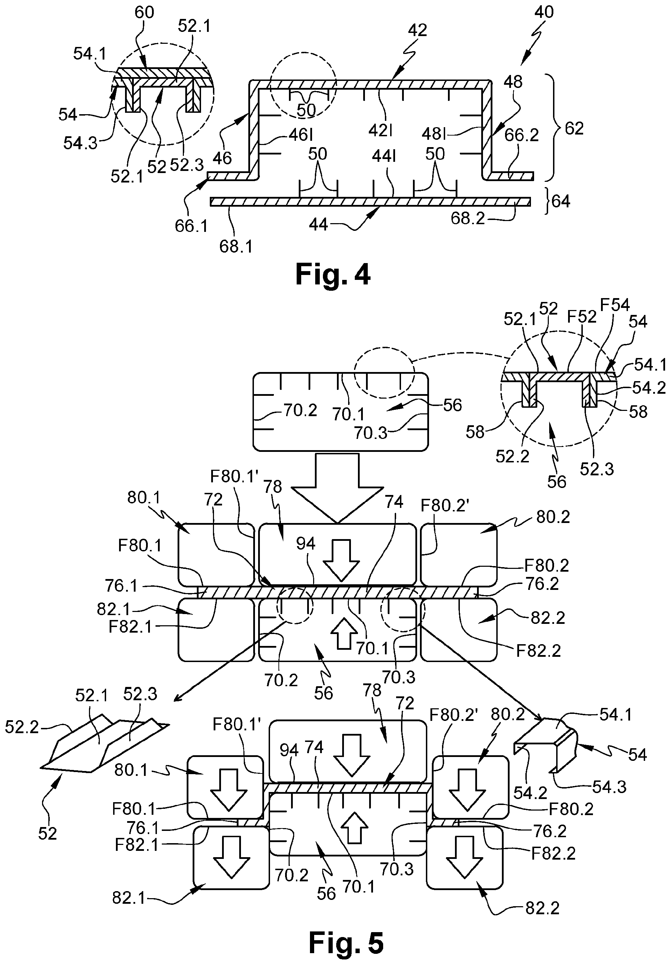

Selon un mode de réalisation visible sur la figure 4, un caisson central de voilure 40 comprend un panneau supérieur 42, un panneau inférieur 44, un longeron avant 46 et un longeron arrière 48.

Les panneaux supérieur et inférieur 42, 44 ainsi que les longerons avant et arrière 46, 48 présentent des faces internes (orientées vers le centre du caisson central voilure) référencées respectivement 42I, 44I, 46I et 48I.

Au moins un panneau parmi les panneaux supérieur et inférieur 42, 44 ainsi que les longerons avant et arrière 46, 48 comprend au moins un raidisseur 50, positionné sur sa face interne 42I, 44I, 46I, 48I. Selon une configuration, chaque panneau supérieur et inférieur 42, 44 et chaque longeron avant et arrière 46, 48 comprend, sur sa face interne 42I, 44I, 46I, 48I, au moins un raidisseur 50, généralement plusieurs raidisseurs 50 parallèles entre eux et orientés selon une direction transversale.

Le caisson central de voilure 40 est en matériau composite.

Selon un mode de réalisation, le caisson central de voilure 40 est obtenu à partir d'une pluralité de profilés 52, 54 en matériau composite, comme des profilés en U 52, en C 54 ou en L par exemple. Comme illustré sur la figure 5, chaque profilé en U comprend une base 52.1 et deux ailes 52.2, 52.3 parallèles entre elles et positionnées de part et d'autre de la base 52.1. Chaque profilé en C comprend une base en V 54.1 ainsi que deux ailes 54.2, 54.3 positionnées de part et d'autre de la base en V 54.1. Les profilés en C 54 sont positionnés au niveau des zones de jonction des panneaux supérieur/inférieur 42, 44 et des longerons avant/arrière 46, 48. Les profilés en U 52 sont intercalés entre les profilés en C 54.

Selon une configuration, chaque profilé 52, 54 est obtenu à partir d'une préforme de fibres pré-imprégnées qui peut être partiellement polymérisée afin de conserver sa géométrie.

Selon un mode opératoire, les profilés 52, 54 sont rapportés directement sur au moins un moule 56 qui présente des logements 58, comme des rainures par exemple, un pour chaque raidisseur 50. En présence de profilés en U, en C ou en L, chaque logement 58 est configuré pour recevoir deux ailes accolées de deux profilés en U 52 et/ou C 54 et/ou en L juxtaposés. En variante, les profilés 52, 54 sont positionnés sur des moules secondaires rapportés sur le moule 56.

Les profilés 52, 54 ne sont pas plus détaillés car ils peuvent identiques à ceux de l'art antérieur. Bien entendu, les profilés 52, 54 ne sont pas limités à une section en U, en C ou en L. Ainsi, ils pourraient avoir une section en T, en I, en L ou autres. Quel que soit le mode de réalisation, un profilé 52, 54 est en matériau composite et comprend au moins une face de jonction F52, F54 dégagée lorsque le profilé 52, 54 est rapporté, directement ou indirectement, sur le moule 56.

En complément des profilés 52, 54, le caisson central de voilure 40 comprend une peau externe 60 en matériau composite, en contact avec les faces de jonctions F52, F54 des profilés 52, 54, comme illustré sur la figure 4.

Selon un premier mode de réalisation, le caisson central voilure 40 comprend des première et deuxième parties 62, 64 assemblées, comme illustré sur la figure 4. Selon une configuration, la première partie 62 comprend le panneau supérieur 42, les longerons avant et arrière 46, 48 ainsi que des première et deuxième ailes 66.1, 66.2, la première aile 66.1 étant reliée au longeron avant 46, approximativement perpendiculaire audit longeron avant 46 et le prolongeant en direction opposée du longeron arrière 48, la deuxième aile 66.2 étant reliée au longeron arrière 48, approximativement perpendiculaire audit longeron arrière 48 et le prolongeant en direction opposée du longeron avant 46. Ainsi, la première partie 62 présente, dans un plan longitudinal, une section approximativement en oméga.

La deuxième partie 64 comprend le panneau inférieur 44 ainsi que des première et deuxième extensions 68.1, 68.2 disposées de part et d'autre du panneau inférieur 44 et sensiblement coplanaires au panneau inférieur 44.

Les première et deuxième parties 62, 64 sont assemblées en plaquant la première aile 66.1 contre la première extension 68.1 et la deuxième aile 66.2 contre la deuxième extension 68.2, les première et deuxième parties 62, 64 étant reliées par collage, par copolymérisation, par des éléments de liaison comme des rivets ou des boulons par exemple ou par toute autre technique d'assemble.

Selon ce premier mode de réalisation, le moule 56 comprend une face supérieure 70.1 conformée comme la face interne 42I du panneau supérieur 42, une première face latérale 70.2 conformée comme la face interne 46I du longeron avant 46 ainsi qu'une deuxième face latérale 70.3, opposée à la deuxième face latérale 70.2, conformée comme la face interne 48I du longeron arrière 48. La face supérieure 70.1 ainsi que les première et deuxième faces latérales 70.2, 70.3 sont configurées pour recevoir les profilés 52, 54. Selon une configuration, elles comprennent des logements 58 pour loger les ailes 52.2, 52.3, 54.2, 54.3 des profilés en U 52, en C 54 ou en L afin de former les raidisseurs 50.

Un procédé de fabrication d'un caisson central de voilure 40 comprend une étape d'obtention des profilés 52, 54, une étape de positionnement desdits profilés 52, 54 sur le moule 56, une étape d'obtention d'une préforme de fibres 72 plane présentant une épaisseur sensiblement égale à la peau externe 60, une étape de pose de ladite préforme de fibres 72 plane sur les faces de jonction F52, F54 des profilés 52, 54 positionnés sur la face supérieure 70.1 du moule 56, une étape de formage de la préforme de fibres 72 plane afin de la plaquer contre les faces de jonction F52, F54 des profilés 52, 54 positionnés sur les première et deuxième faces latérales 70.2, 70.3 du moule 56, une étape de mise en place d'au moins un habillage de polymérisation, une étape de polymérisation ainsi qu'une étape de démoulage. La préforme de fibres 72 plane est dimensionnée pour former la peau externe 60 du panneau supérieur 42, des longerons avant/arrière 46, 48 ainsi que les première et deuxième ailes 66.1, 66.2. Ainsi, la préforme de fibres 72 plane comprend une partie principale 74 destinée à être positionnée au droit de la face supérieure 70.1 du moule 56 ainsi que des extensions latérales droite et gauche 76.1, 76.2 situées de part et d'autre de la partie principale 74, destinées à être positionnées au droit des première et deuxième faces latérales 70.2, 70.3 du moule 56 et à former les première et deuxième ailes 66.1, 66.2. Chaque extension latérale droite et gauche 76.1, 76.2 s'étend entre un premier bord relié à la partie principale 74 et un deuxième bord libre.

Lors de l'étape de formage, les extensions latérales droite et gauche 76.1, 76.2 de la préforme de fibres 72 sont plaquées simultanément et de la même manière contre les faces de jonction F52, F54 des profilés 52, 54 positionnés sur les première et deuxième faces latérales 70.2, 70.3 du moule 56 afin d'équilibrer les forces de part et d'autre de la partie principale 74 de ladite préforme de fibres 72.

Selon le premier mode de réalisation, la deuxième partie 64 comprend un panneau raidi conformé comme le panneau inférieur 44, comportant les première et deuxième extensions 68.1, 68.2.

Selon un autre mode de réalisation visible sur la figure 7, le moule 56 comprend une face supérieure 70.1 conformée comme la face interne 42I du panneau supérieur 42, une première face latérale 70.2 conformée comme la face interne 46I du longeron avant 46, une deuxième face latérale 70.3 conformée comme la face interne 48I du longeron arrière 48 ainsi qu'une face inférieure 70.4 conformée comme la face interne 44I du panneau inférieur 44. Les faces supérieure et inférieure 70.1, 70.4 ainsi que les première et deuxième faces latérales 70.2, 70.3 sont configurées pour recevoir les profilés 52, 54. Selon une configuration, elles comprennent des rainures 58 pour loger les ailes 52.2, 52.3, 54.2, 54.3 des profilés en U 52, en C 54 ou en L afin de former les raidisseurs 50.

Un procédé de fabrication d'un caisson central de voilure 40 comprend une étape d'obtention des profilés 52, 54, une étape de positionnement desdits profilés 52, 54 sur le moule 56, une étape d'obtention d'une préforme de fibres 72' plane présentant une épaisseur sensiblement égale à la peau externe 60, une étape de pose de ladite préforme plane 72' sur les faces de jonction F52, F54 des profilés 52, 54 positionnés sur la face supérieure 70.1 du moule 56, une étape de formage de la préforme de fibres 72' plane afin de la plaquer contre les faces de jonction F52, F54 des profilés 52, 54 positionnés sur les première et deuxième faces latérales 70.2, 70.3 puis contre les faces de jonction F52, F54 des profilés 52, 54 positionnés sur la face inférieure 70.4 du moule 56, une étape de mise en place d'au moins un habillage de polymérisation, une étape de polymérisation ainsi qu'une étape de démoulage. La préforme de fibres 72' plane est dimensionnée pour former la peau externe 60 des panneaux supérieur et inférieur 42, 44 ainsi que des longerons avant et arrière 46, 48. Ainsi, la préforme de fibres 72' plane comprend une partie principale 74 destinée à être positionnée au droit de la face supérieure 70.1 du moule 56 ainsi que des extensions latérales droite et gauche 76.1, 76.2 situées de part et d'autre de la partie principale 74 et destinées à être positionnées au droit des première et deuxième faces latérales 70.2, 70.3 et de la face inférieure 70.4 du moule 56. Lors de l'étape de formage, les extensions latérales droite et gauche 76.1, 76.2 de la préforme de fibres 72' sont plaquées simultanément et de la même manière contre les faces de jonction F52, F54 des profilés 52, 54 positionnés sur les première et deuxième faces latérales 70.2, 70.3 puis contre celles des profilés 52, 54 positionnés sur la face inférieure 70.4 du moule 56 afin d'équilibrer les forces de part et d'autre de la partie principale 74 de ladite préforme de fibres 72'.

Quel que soit le mode de réalisation, le moule 56 comprend au moins des première et deuxième faces, formant approximativement un angle droit, conformées comme les faces internes d'un panneau supérieur ou inférieur 42, 44 et d'un longeron avant ou arrière 46, 48 contigus.

En complément, le procédé de fabrication d'un caisson central de voilure 40 comprend une étape d'obtention des profilés 52, 54, une étape de positionnement desdits profilés 52, 54 sur le moule 56 qui comporte au moins des première et deuxième faces 70.1, 70.2, 70.3 au niveau desquelles sont positionnés les profilés 52, 54, une étape d'obtention d'une préforme de fibres 72, 72' plane présentant une épaisseur sensiblement égale à la peau externe 60, une étape de pose de ladite préforme de fibres 72, 72' sur les profilés 52, 54 positionnés sur la première face du moule 56, une étape de formage de la préforme de fibres 72, 72' afin de la plaquer contre les profilés 52, 54 positionnés sur au moins la deuxième face du moule 56, une étape de mise en place d'au moins un habillage de polymérisation, au moins une étape de polymérisation ainsi qu'au moins une étape de démoulage. Ainsi, la préforme de fibres 72, 72' comprend une partie principale 74 destinée à être positionnée au droit de la première face du moule 56 et au moins une extension latérale 76.1, 76.2 destinée à être positionnée au moins au droit de la deuxième face du moule 56.

Quel que soit le mode de réalisation, la préforme de fibres 72, 72' est réalisée à partir de techniques d'obtention de préforme à plat comme une technique de drapage de plis de fibres. Ces techniques permettent d'obtenir une préforme rapidement et à des coûts de production nettement inférieurs à ceux d'une technique d'enroulement.

Selon une configuration, la préforme de fibres 72, 72' comprend une partie principale 74 ainsi que deux extensions latérales 76.1, 76.2, positionnées de part et d'autre de la partie principale 74, qui sont plaquées simultanément et de la même manière contre les profilés 52, 54 positionnés sur au moins deux faces opposées du moule 56. Cette configuration permet d'équilibrer les efforts de part et d'autre de la partie principale 74 lors de l'étape de formage. Selon un premier mode opératoire, la préforme de fibres 72, 72' est pliée selon au moins une ligne de pliage correspondant à une arête reliant un panneau supérieur ou inférieur 42, 44 et un longeron avant ou arrière 46, 48 lors de l'étape de formage.

Selon un autre mode opératoire visible sur les figures 5 à 7, chaque extension latérale 76.1, 76.2 est progressivement plaquée contre les profilés 52, 54 positionnés sur au moins une face du moule 56, en partant du premier bord de l'extension latérale 76.1, 76.2 en direction de son deuxième bord libre. Cette solution permet de s'assurer que chaque extension latérale 76.1, 76.2 soit bien en contact avec les profilés 52, 54.

Le procédé de fabrication précédemment décrit est plus particulièrement adapté pour fabriquer la première partie 62 du caisson central de voilure 40 visible sur la figure 4. En variante, le procédé de fabrication illustré par la figure 7 peut permettre l'obtention d'un caisson central de voilure sans assemblage.

Bien que décrit appliqué à un caisson central de voilure, le procédé de fabrication pourrait être utilisé pour fabriquer d'autres structures en caisson, comme un caisson de voilure par exemple.

Pour mettre en oeuvre l'étape de formage, un outillage de formage comprend, en plus du moule 56, au moins un mors principal 78 configuré pour plaquer la partie principale 74 de la préforme de fibres 72, 72' contre les profilés 52, 54 positionnés sur une première face du moule 56, notamment sa face supérieure 70.1, ainsi que, pour chaque extension latérale, au moins une paire de mors secondaires configurés pour maintenir l'extension latérale 76.1, 76.2 de la préforme de fibres 72, 72' et se déplacer selon au moins une direction parallèle à la deuxième face du moule.

Selon une configuration, l'outillage de formage comprend une première paire de mors secondaires 80.1, 82.1 configurés pour coopérer avec l'extension latérale droite 76.1 ainsi qu'une deuxième paire de mors secondaires 80.2, 82.2 configurés pour coopérer avec l'extension latérale gauche 76.2.

Le mors principal 78 comprend une face de contact F78 sensiblement parallèle à la première face 70.1 du moule 56. Le mors principal 78 est configuré pour occuper une première position dans laquelle le mors principal 78 est écarté du moule 56 de manière à permettre la mise en place de la préforme de fibres 72, 72' ainsi qu'une deuxième position dans laquelle le mors principal 78 est rapproché du moule 56 de manière à la maintenir plaquée contre les profilés 52, 54 positionnés sur la première face du moule 56.

Selon un mode de réalisation visible sur la figure 6, l'outillage de formage comprend une structure 84 ainsi qu'au moins une première articulation 86 reliant le mors principal 78 et la structure 84 et configurée pour permettre au mors principal 78 de passer de la première position vers la deuxième position et inversement. A titre d'exemple, la première articulation 86 peut être une liaison glissière.

Chaque mors secondaire 80.1, 82.1, 80.2, 82.2 comprend une première face de contact F80.1, F82.1, F80.2, F82.2. Ces premières faces de contact des mors secondaires sont sensiblement parallèles entre elles pour chaque paire, perpendiculaires à la deuxième ou troisième face latérale 70.2, 70.3 du moule 56 et configurées pour être disposées de part et d'autre de la préforme de fibres 72, 72'. Pour chaque paire, au moins un des deux mors secondaires 80.1, 82.1, 80.2, 82.2 est mobile selon une direction perpendiculaire aux premières faces de contact F80.1, F82.1, F80.2, F82.2 entre une première position dans laquelle les deux mors secondaires 80.1, 82.1, 80.2, 82.2 sont écartés l'un de l'autre de manière à permettre la mise en place de la préforme de fibres 72, 72' entre les deux mors secondaires 80.1, 82.1, 80.2, 82.2 ainsi qu'une deuxième position dans laquelle les deux mors secondaires 80.1, 82.1, 80.2, 82.2 sont rapprochés et les premières faces de contact F80.1, F82.1, F80.2, F82.2 des deux mors secondaires 80.1, 82.1, 80.2, 82.2 sont en contact avec la préforme de fibres 72, 72' et la maintiennent.

Selon un mode de réalisation, l'outillage de formage comprend, pour chaque paire de mors secondaires 80.1, 82.1, 80.2, 82.2, un support 88 et au moins une deuxième articulation 90 reliant le support 88 et l'un des mors secondaires 80.1, 82.1, 80.2, 82.2 et configurée pour permettre aux mors secondaires de passer de la première position vers la deuxième position ou inversement. A titre d'exemple, la deuxième articulation 90 peut être une liaison glissière. Selon un mode de réalisation visible sur les figures 5 et 6, chaque paire de mors secondaires 80.1, 82.1, 80.2, 82.2 est configurée pour se translater selon une direction parallèle à la face du moule 56 au droit de laquelle l'extension latérale 76.1, 76.2 maintenue par la paire de mors secondaires 80.1, 82.1, 80.2, 82.2 doit être positionnée. En présence de première et deuxième paires de mors secondaires 80.1, 82.1, 80.2, 82.2, la première paire de mors secondaires 80.1, 82.1, maintenant l'extension latérale droite 76.1 de la préforme de fibres 72, 72', se translate parallèlement à la première face latérale 70.2 du moule 56 et la deuxième paire de mors secondaires 80.2, 82.2, maintenant l'extension latérale gauche 76.2 de la préforme de fibres 72, 72', se translate parallèlement à la deuxième face latérale 70.3 du moule 56.

Selon un autre mode de réalisation visible sur la figure 7, chaque paire de mors secondaires 80.1, 82.1, 80.2, 82.2 est configurée pour se translater selon deux directions, une première direction parallèle à la première ou deuxième face latérale 70.2, 70.3 du moule 56 et une deuxième direction parallèle à la face inférieure 70.4 du moule 56.

Selon un agencement, l'outillage comprend, pour chaque paire de mors secondaires, au moins une liaison glissière 92 reliant le support 88 et la structure 84 configurée pour permettre au support 88 de se translater au moins selon une direction parallèle à la première ou deuxième face latérale 70.2, 70.3 du moule 56.

Chaque paire de mors secondaires comprend un mors secondaire amont 80.1, 80.2 et un secondaire aval 82.1, 82.2. Les notions amont et aval font référence au sens de déplacement des mors secondaires, le mors secondaire amont 80.1, 80.2 étant situé en amont du mors secondaire aval 82.1, 82.2. Selon l'exemple illustré sur les figures 5 et 6, lorsque la préforme de fibres 72, 72' est positionnée contre la face supérieure 70.1 du moule 56, le mors secondaire amont 80.1, 80.2 est positionné au-dessus de l'extension latérale droite ou gauche 76.1, 76.2 et le mors secondaire aval 82.1, 82.2 est positionné au-dessous de l'extension latérale droite ou gauche 76.1, 76.2.

Chaque mors secondaire amont 80.1, 80.2 comprend une première face de contact F80.1, F80.2 orientée vers le mors secondaire aval 82.1, 82.2 ainsi qu'une deuxième face de contact F80.1', F80.2' orientée vers le moule 56 et sensiblement parallèle à la face du moule 56 contre laquelle l'extension latérale 76.1, 76.2 maintenue par les mors secondaires amont et aval 80.1, 82.1, 80.2, 82.2 doit être positionnée. Selon un agencement, lorsque les mors secondaires 80.1, 80.2, 82.1, 82.2 sont dans la deuxième position, les premières faces de contact F80.1, F80.2, F80.2, F82.2 des mors secondaires amont et aval sont séparées d'une distance sensiblement égale à l'épaisseur de la préforme de fibres 72, 72'. Pour chaque mors secondaire amont 80.1, 80.2, la deuxième face de contact F80.1', F80.2' est espacée des profilés 52, 54 positionnés sur la première ou deuxième face latérale 70.2, 70.3 du moule 56 d'une distance sensiblement égale à l'épaisseur de la préforme de fibres 72, 72'. Ainsi, lors de son mouvement de translation, chaque mors secondaire amont 80.1, 80.2 et plus particulièrement sa deuxième face de contact F80.1', F80.2', maintient la préforme de fibres 72, 72' plaquée contre les profilés 52, 54 positionnés sur la première ou deuxième face latérale 70.2, 70.3 du moule 56.

Selon une première configuration, la préforme de fibres 72, 72' n'est pas pré-imprégnée de résine. Dans ce cas, lors du déplacement des mors secondaires 80.1, 80.2, 82.1, 82.2, la préforme de fibres 72, 72' glisse entre les premières faces de contact F80.1, F80.2, F80.2, F82.2 des mors secondaires amont et aval ainsi que le long de la deuxième face de contact F80.1', F80.2' des mors secondaires amont 80.1, 80.2.

Selon une deuxième configuration, la préforme de fibres 72, 72' est pré-imprégnée de résine. Selon un mode de réalisation, au moins une face de contact F78, F80.1, F80.2, F80.2, F82.2, F80.1', F80.2' des mors 78, 80.1, 80.2, 82.1, 82.2 comprend un film de démoulage 94 limitant les risques de contamination de la préforme de fibres 72, 72' et facilitant le détachement de cette dernière lorsqu'elle est pré-imprégnée de résine.

Selon un agencement, la face de contact F78 du mors principal 78 comprend un film de démoulage 94.

Chaque mors secondaire aval 82.1, 82.2 comprend, au niveau de sa première face de contact F82.1, F82.2, au moins une bande défilante 96 tendue entre deux cylindres pivotants 98, 98'. En fonctionnement, la bande défilante 96 est en contact avec la préforme de fibres 72, 72' et défile sur les cylindres pivotants 98, 98'. Cette bande défilante 96 peut être un film de démoulage ou revêtue d'un film de démoulage.

Selon une première configuration, le défilement de la bande défilante 96 est libre. Dans ce cas, en défilant à la même vitesse de déplacement de la préforme de fibres 72, 72' entre les mors secondaires amont et aval, la bande défilante 96 limite les frottements entre la préforme de fibres 72, 72' et les mors secondaires aval 82.1, 82.2.

Selon une deuxième configuration, le défilement de la bande défilante 96 est contrôlé, par exemple en imposant une vitesse de rotation donnée à au moins un des cylindres pivotants 98, 98'. Dans ce cas, la bande défilante 96 permet de réguler l'effort de traction exercé sur la préforme de fibres 72, 72'.

Chaque mors secondaire amont 80.1, 80.2 comprend, au niveau de sa première et/ou deuxième face de contact F80.1, F80.2, F80.1', F80.2', au moins une bande défilante 100, tendue entre au moins deux cylindres pivotants 102, 102'. Selon une configuration, chaque mors secondaire amont 80.1, 80.2 comprend une unique bande défilante 100 tendue entre au moins trois cylindres pivotants 102, 102', 102", lesdits cylindres pivotants étant agencés de manière à ce que la bande défilante 100 défile au droit des première et deuxième faces de contact F80.1, F80.2, F80.1', F80.2'. En fonctionnement, la bande défilante 100 est en contact avec la préforme de fibres 72, 72' et défile sur les trois cylindres pivotants 102, 102', 102". Selon une première configuration, le défilement de la bande défilante 100 est libre. Dans ce cas, en défilant à la même vitesse de déplacement que celle de la préforme de fibres 72, 72' entre les mors secondaires amont et aval, la bande défilante 100 limite les frottements entre la préforme de fibres 72, 72' et les mors secondaires amont 80.1, 80.2.

Selon une deuxième configuration, le défilement de la bande défilante 100 est contrôlé, par exemple en imposant une vitesse de rotation donnée à au moins un des cylindres pivotants 102, 102', 102". Dans ce cas, la bande défilante 100 permet de réguler l'effort de traction exercé sur la préforme de fibres 72, 72'.

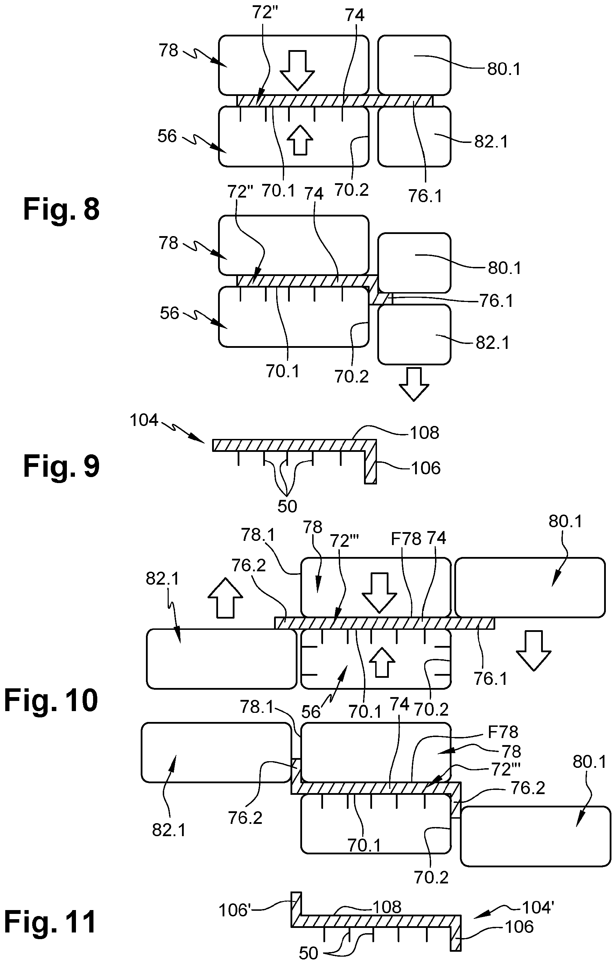

L'invention n'est pas limitée aux modes de réalisation précédemment décrits. Selon un autre mode de réalisation illustré par les figures 8 et 9, l'invention peut être utilisée pour fabriquer un panneau raidi 104 comprenant au moins un rebord 106 plié à 90°. Ce panneau raidi 104 comprend une paroi principale 108, comme un panneau supérieur ou inférieur ou un longeron avant ou arrière par exemple, et le rebord 106 formant un angle d'environ 90° avec la paroi principale 108, ledit rebord 106 étant destiné à être relié avec une autre paroi, comme un panneau supérieur ou inférieur ou un longeron avant ou arrière par exemple, de manière à former une partie d'un caisson.

La paroi principale 108 comprend des raidisseurs 50 sur l'une de ses faces. Comme précédemment, ce panneau raidi 104 est obtenu à partir d'une peau externe en matériau composite et d'une pluralité de profilés en matériau composite présentant chacun une face de jonction en contact avec la peau externe ; ledit procédé comprenant une étape d'obtention des profilés, une étape de positionnement desdits profilés sur une face 70.1 un moule 56, une étape d'obtention d'une préforme de fibres 72" plane présentant une épaisseur sensiblement égale à la peau externe et une étape de pose de ladite préforme de fibres sur les profilés positionnés sur la première face 70.1 du moule 56. Ce dernier comprend une deuxième face latérale 70.2 conformée comme le rebord 106, formant un angle d'environ 90° avec la première face 70.1.

La préforme de fibres 72" comprend une partie principale 74 destinée à être positionnée au droit de la première face 70.1 du moule 56 et au moins une extension latérale 76.1 destinée à être positionnée au droit de la deuxième face latérale 70.2 du moule 56 après une étape de formage de la préforme de fibres 72'.

Comme précédemment, pour cette étape de formage, la partie principale 74 est maintenue plaquée contre les faces de jonction des profilés positionnés sur la première face 70.1 du moule 56 par un mors principal 78 et l'extension latérale 76.1 est positionnée entre une paire de mors secondaires 80.1, 82.1 configurée pour se translater selon au moins une direction parallèle à la deuxième face du moule 56. A l'issue de la translation de la paire de mors secondaires 80.1, 82.1, l'extension latérale 76.1 est plaquée contre la deuxième face latérale 70.2 du moule 56.

Selon un autre mode de réalisation, le panneau raidi 104' comprend deux rebords 106, 106'. Ces rebords 106, 106' forment un angle d'environ 90° avec la paroi principale 108. Selon un agencement, les rebords 106, 106' sont pliés dans la même direction de manière à obtenir un panneau raidi en U ou selon des directions opposées, comme illustré sur la figure 11, de manière à obtenir un panneau raidi 104' en Z.

Pour obtenir un rebord 106' plié en direction opposée des raidisseurs 50, le mors principal 78 présente, en plus de la face de contact F78, au moins une face de contact latérale 78.1 conformée comme le rebord 106' à obtenir. Lorsque le panneau raidi 104' comprend un seul rebord 106' plié en direction opposée des raidisseurs 50, le mors principal 78 présente une seule face de contact latérale 78.1. Lorsque le panneau raidi comprend deux rebords pliés en direction opposée des raidisseurs 50, le mors principal 78 présente deux faces de contact latérales opposées.

Pour obtenir un panneau raidi 104' avec deux rebords 106, 106', la préforme de fibres 72‴ plane comprend une partie principale 74 destinée à être positionnée au droit de la première face 70.1 du moule 56 et des première et deuxième extensions latérales 76.1, 76.2, de part et d'autre de la partie principale 74, la première extension latérale 76.1 étant rabattue contre l'une des faces latérales 70.2 du moule principal 56 et la deuxième extension latérale 76.2 étant rabattue contre l'une des faces de contact latérales 78.1 du mors principal 78 lors d'une étape de formage.

Comme précédemment, pour cette étape de formage, la partie principale 74 est maintenue plaquée contre les faces de jonction des profilés positionnés sur la première face 70.1 du moule 56 par le mors principal 78.

Selon un premier mode opératoire, lors de l'étape de formage, chaque extension latérale 76.1, 76.2 est positionnée entre une paire de mors secondaires configurée pour se translater selon au moins une direction parallèle à la face latérale 70.2 du moule 56 ou à la face de contact latérale 78.1 du mors principal 78.

Les deux paires de mors secondaires peuvent se translater dans le même sens lorsque les rebords 106, 106' sont pliés dans le même sens ou dans des sens opposés lorsque les rebords 106, 106' sont pliés dans des sens opposés pour obtenir un panneau raidi 104' en forme de Z. Selon un autre mode opératoire simplifié visible sur la figure 10, pour l'étape de formage, la partie principale 74 est maintenue plaquée contre les faces de jonction des profilés positionnés sur la première face 70.1 du moule 56 par un mors principal 78.

En complément, chaque extension latérale 76.1, 76.2 est rabattue contre une surface de formage parmi la face latérale 70.2 du moule 56 et la face de contact latérale 78.1 du mors principal 78 grâce à un mors secondaire amont 80.1, 82.1 qui se translate selon une direction de déplacement parallèle à la surface de formage en poussant ladite extension latérale 76.1, 76.2, le mors secondaire amont 80.1, 82.1 étant positionné en amont de l'extension latérale 76.1, 76.2 selon la direction de déplacement lors de son mouvement de translation. Ce mors secondaire amont 80.1, 82.1 présente une face de contact orientée en direction de la surface de formage, espacée de la surface de formage d'une distance sensiblement égale à l'épaisseur de la préforme de fibres 72‴ plane.

Les faces des mors secondaires amont et/ou aval en contact avec les préformes de fibres 72", 72‴ peuvent comprendre un film de démoulage et/ou une bande défilante comme dans le mode de réalisation visible sur la figure 6.

Le procédé de fabrication de l'invention permet d'obtenir une partie d'une structure en caisson comportant au moins une paroi principale raidie (comme un panneau supérieur ou inférieur ou un longeron avant ou arrière) prolongée par au moins un rebord 106, 106' et/ou au moins une paroi secondaire raidie (comme un panneau supérieur ou inférieur ou un longeron avant ou arrière), ladite partie de structure en caisson étant obtenue à partir d'une peau externe 60 en matériau composite et d'une pluralité de profilés 52, 54 en matériau composite présentant chacun une face de jonction en contact avec la peau externe 60. Ce procédé comprend :
- une étape d'obtention des profilés 52, 54,
- une étape de positionnement desdits profilés 52, 54 sur un moule 56 comportant au moins une première face 70.1 au niveau de laquelle sont positionnés les profilés 52, 54,
- une étape d'obtention d'une préforme de fibres 72, 72', 72", 72‴ plane présentant une épaisseur sensiblement égale à la peau externe 60,
- une étape de pose d'une partie centrale 74 de ladite préforme de fibres 72, 72', 72", 72‴ sur les profilés 52, 54 positionnés sur la première face 70.1 du moule 56, la préforme de fibres 72, 72', 72", 72‴ présentant au moins une extension latérale 76.1, 76.2 dans le prolongement de la partie centrale 74,
- une étape de formage d'au moins une extension latérale 76.1, 76.2 de la préforme de fibres,
- une étape de mise en place d'au moins un habillage de polymérisation,
- au moins une étape de polymérisation,
- au moins une étape de démoulage.

Lors de cette étape de formage, la partie principale 74 est maintenue plaquée contre les faces de jonction des profilés positionnés sur la première face 70.1 du moule 56 par au moins un mors principal 78. La face de contact F78 du mors principal 78 peut comprendre un film de démoulage.

Le fait que la partie centrale 74 de la préforme de fibres soit maintenue plaquée contre les profilés positionnés sur la première face 70.1 du moule 56 par le mors principal 78 permet de pouvoir plier une seule extension latérale. Ainsi, le procédé de l'invention peut permettre d'obtenir des panneaux raidis avec un seul rebord ou une seule paroi secondaire raidie. Selon un autre avantage, cela permet d'optimiser le contact entre les faces de jonction des profilés et la préforme de fibres.

Lors de l'étape de formage, au moins une extension latérale 76.1, 76.2 de la préforme de fibres 72, 72', 72‴ est rabattue contre une surface de formage sensiblement perpendiculaire à la première face 70.1 du moule 56 en utilisant au moins un mors secondaire 80.1, 80.2, 82.1, 82.2 se translatant parallèlement à la surface de formage. Selon les modes réalisation, la surface formage peut être une face latérale 70.2, 70.3 du moule 56, une face de contact 78.1 du mors principal 78 ou les faces de jonction des profilés positionnés sur une face latérale 70.2, 70.3 du moule 56. Le fait de rabattre au moins une extension latérale 76.1, 76.2 en la positionnant entre une paire de mors secondaires se translatant parallèlement à la surface de formage permet d'optimiser la déformation de l'extension latérale 76.1, 76.2 en évitant qu'elle ne se décolle de la surface de formage à l'issue de l'étape de formage.

## Revendications

1. Procédé de fabrication d'au moins une partie d'une structure en caisson (40) comportant au moins une paroi principale raidie (42, 44, 46, 48) prolongée par au moins un rebord (106, 106') et/ou par au moins une paroi secondaire raidie (42, 44, 46, 48), ladite partie de structure en caisson (40) étant obtenue à partir d'une peau externe (60) en matériau composite et d'une pluralité de profilés (52, 54) en matériau composite présentant chacun une face de jonction (F52, F54) en contact avec la peau externe (60), ledit procédé comprenant une étape d'obtention des profilés (52, 54), une étape de positionnement desdits profilés (52, 54) sur un moule (56) comportant au moins une première face (70.1, 70.2, 70.3) au niveau de laquelle sont positionnés les profilés (52, 54), une étape d'obtention d'une préforme de fibres (72, 72', 72", 72‴) plane présentant une épaisseur sensiblement égale à la peau externe (60), une étape de pose d'une partie centrale (74) de la préforme de fibres (72, 72', 72", 72‴) sur les profilés (52, 54) positionnés sur la première face (70.1) du moule (56), la préforme de fibres (72, 72', 72", 72‴) présentant au moins une extension latérale (76.1, 76.2) dans le prolongement de la partie centrale (74), une étape de formage de l'extension latérale (76.1, 76.2), une étape de mise en place d'au moins un habillage de polymérisation, au moins une étape de polymérisation ainsi qu'au moins une étape de démoulage ; **caractérisé en ce que** lors de l'étape de formage, la partie principale (74) est maintenue plaquée contre les faces de jonction des profilés (52, 54) positionnés sur la première face (70.1) du moule (56) par au moins un mors principal (78) et **en ce que** l'extension latérale (76.1, 76.2) de la préforme de fibres (72, 72', 72", 72‴) est rabattue contre une surface de formage, sensiblement perpendiculaire à la première face (70.1) du moule (56) grâce à au moins un mors secondaire (80.1, 80.2, 82.1, 82.2) configuré pour se translater parallèlement à la surface de formage.

2. Procédé selon la revendication précédente, **caractérisé en ce que** lors de l'étape de formage, l'extension latérale (76.1, 76.2) de la préforme de fibres (72, 72') est maintenue entre une paire de mors secondaires (80.1, 80.2, 82.1, 82.2) configurée pour se translater selon au moins une direction parallèle à la surface de formage.

3. Procédé selon l'une des revendications 1 à 2, **caractérisé en ce que** la préforme de fibres (72, 72') comprend des extensions latérales droite et gauche (76.1, 76.2) positionnées de part et d'autre de la partie principale (74).

4. Procédé selon l'une des revendications 1 à 3, **caractérisé en ce que** la surface de formage correspond à des faces de jonction de profilés positionnés sur une face latérale (70.2, 70.3) du moule (56).

5. Procédé de fabrication d'un caisson central de voilure (40) comportant un panneau supérieur (42), un panneau inférieur (44), un longeron avant (46) et un longeron arrière (48), **caractérisé en ce que** le caisson central de voilure (40) comprend :
- une première partie (62) comportant le panneau supérieur (42), les longerons avant et arrière (46, 48) ainsi que des première et deuxième ailes (66.1, 66.2), la première aile (66.1) étant reliée au longeron avant (46), approximativement perpendiculaire audit longeron avant (46) et le prolongeant en direction opposée du longeron arrière (48), la deuxième aile (66.2) étant reliée au longeron arrière (48), approximativement perpendiculaire audit longeron arrière (48) et le prolongeant en direction opposée du longeron avant (46), ladite première partie étant obtenue à partir du procédé de fabrication selon l'une des revendications 1 à 4,
- une deuxième partie (64) comportant un panneau raidi conformé comme le panneau inférieur (44) et comprenant des première et deuxième extensions (68.1, 68.2) disposées de part et d'autre du panneau inférieur (44), la première extension (68.1) étant reliée à la première aile (66.1), la deuxième extension (68.2) étant reliée à la deuxième aile (66.2).

6. Caisson central de voilure obtenu à partir du procédé de fabrication selon la revendication précédente.

7. Outillage de formage permettant de mettre en oeuvre le procédé de fabrication selon l'une des revendications 1 à 4 d'au moins une partie d'une structure en caisson (40) comportant au moins une paroi principale raidie (42, 44, 46, 48) prolongée par au moins un rebord (106, 106') et/ou par au moins une paroi secondaire raidie (42, 44, 46, 48), **caractérisé en ce que** l'outillage de formage comprend :
- un moule (56) présentant au moins une première face (70.1, 70.2, 70.3) conformée comme la paroi principale raidie et configurée pour supporter des profilés (52, 54),
- au moins un mors principal (78) comprenant une face de contact (F78) sensiblement parallèle à la première face (70.1) du moule (56), configuré pour maintenir plaquée une partie principale (74) d'une préforme de fibres (72, 72') contre des profilés positionnés sur la première face (70.1) du moule (56),
- au moins un mors secondaire (80.1, 80.2, 82.12, 82.2) configuré pour rabattre une extension latérale (76.1, 76.2) de la préforme de fibres (72, 72') contre une surface de formage et se déplacer selon au moins une direction parallèle à la surface de formage.

8. Outillage de formage selon la revendication précédente, **caractérisé en ce que** l'outillage de formage comprend au moins une paire de mors secondaires amont et aval (80.1, 80.2, 82.12, 82.2) configurés pour chacun maintenir une extension latérale (76.1, 76.2) de la préforme de fibres et se déplacer selon la direction parallèle à la surface de formage.

9. Outillage de formage selon la revendication précédente, **caractérisé en ce que** chaque mors secondaire amont et aval (80.1, 82.1, 80.2, 82.2) comprend une première face de contact (F80.1, F82.1, F80.2, F82.2), les premières faces de contact des mors secondaires amont et aval (80.1, 82.1, 80.2, 82.2) étant configurées pour être disposées de part et d'autre de la préforme de fibres (72, 72'), sensiblement parallèles entre elles pour chaque paire et perpendiculaires à une face du moule (56) contre laquelle l'extension latérale (76.1, 76.2) maintenue par les mors secondaires amont et aval (80.1, 82.1, 80.2, 82.2) doit être positionnée.

10. Outillage selon la revendication précédente, **caractérisé en ce que** chaque mors secondaire amont (80.1, 80.2) comprend une deuxième face de contact (F80.1', F80.2') orientée vers le moule (56), sensiblement parallèle à la face du moule (56) contre laquelle l'extension latérale (76.1, 76.2) maintenue par les mors secondaires amont et aval (80.1, 82.1, 80.2, 82.2) doit être positionnée, en fonctionnement la deuxième face de contact (F80.1', F80.2') étant espacée des profilés (52, 54) positionnés sur ladite face du moule (56) d'une distance sensiblement égale à l'épaisseur de la préforme de fibres (72, 72').

11. Outillage de formage selon la revendication précédente, **caractérisé en ce que** chaque mors secondaire aval (82.1, 82.2) comprend, au niveau de sa première face de contact (F82.1, F82.2), au moins une bande défilante (96).

12. Outillage de formage selon l'une des revendications 10 à 11, **caractérisé en ce que** chaque mors secondaire amont (80.1, 80.2) comprend, au niveau de sa première et/ou deuxième face de contact (F80.1, F80.2, F80.1', F80.2'), au moins une bande défilante (100).

13. Outillage de formage selon la revendication précédente, **caractérisé en ce que** chaque mors secondaire amont (80.1, 80.2) comprend une bande défilante (100) tendue entre au moins trois cylindres pivotants (102, 102', 102") agencés de manière à ce que la bande défilante (100) défile au droit des première et deuxième faces de contact (F80.1, F80.2, F80.1', F80.2').

14. Outillage de formage selon l'une des revendications 8 à 13, **caractérisé en ce que** l'outillage comprend une première paire de mors secondaires (80.1, 82.1) configurés pour coopérer avec une extension latérale droite (76.1) de la préforme de fibres (72, 72') ainsi qu'une deuxième paire de mors secondaires (80.2, 82.2) configurés pour coopérer avec une extension latérale gauche (76.2) de la préforme de fibres (72, 72').

## Patentansprüche

1. Verfahren zur Herstellung wenigstens eines Teils einer Kastenstruktur (40) mit wenigstens einer versteiften Hauptwand (42, 44, 46, 48), die durch wenigstens einen Rand (106, 106') und/oder durch wenigstens eine versteifte Nebenwand (42, 44, 46, 48) verlängert ist, wobei der Teil der Kastenstruktur (40) ausgehend von einer Außenhaut (60) aus Verbundmaterial und einer Vielzahl von Profilen (52, 54) aus Verbundmaterial hergestellt wird, die jeweils eine Verbindungsfläche (F52, F54) in Kontakt mit der Außenhaut (60) aufweisen, wobei das Verfahren einen Schritt zum Erhalten der Profile (52, 54) aufweist, einen Schritt zum Positionieren der Profile (52, 54) auf einer Form (56) mit wenigstens einer ersten Seite (70.1, 70.2, 70.3), in deren Bereich die Profile (52, 54) positioniert sind, einen Schritt zum Erhalt einer ebenen Faservorform (72, 72', 72", 72‴) mit einer Dicke, die im Wesentlichen gleich der Dicke der Außenhaut (60) ist, einen Schritt zum Auflegen eines Mittelteils (74) der Faservorform (72, 72', 72", 72‴) auf die Profile (52, 54), die auf der ersten Seite (70.1) der Form (56) positioniert sind, wobei die Faservorform (72, 72', 72", 72‴) wenigstens eine seitliche Verlängerung (76.1, 76.2) in der Verlängerung des Mittelteils (74) aufweist, einen Schritt des Formens der seitlichen Verlängerung (76.1, 76.2), einen Schritt des Anbringens wenigstens einer Polymerisationsverkleidung, wenigstens einen Polymerisationsschritt sowie wenigstens einen Schritt des Entformens; **dadurch gekennzeichnet, dass** beim Schritt des Formens der Hauptteil (74) durch wenigstens eine Hauptbacke (78) gegen die Verbindungsflächen der auf der ersten Seite (70.1) der Form (56) positionierten Profile (52, 54) gedrückt gehalten wird und dass die seitliche Verlängerung (76.1, 76.2) der Faservorform (72, 72', 72", 72‴) gegen eine Formgebungsoberfläche, die im Wesentlichen rechtwinklig zur ersten Seite (70.1) der Form (56) verläuft, durch wenigstens eine Nebenbacke (80.1, 80.2, 82.1, 82.2) umgeschlagen wird, die so eingerichtet ist, dass sie sich parallel zur Formgebungsoberfläche translatorisch bewegt.

2. Verfahren nach dem vorhergehenden Anspruch, **dadurch gekennzeichnet, dass** während des Schritts des Formens die seitliche Ausdehnung (76.1, 76.2) der Faservorform (72, 72') zwischen einem Paar von Nebenbacken (80.1, 80.2, 82.1, 82.2) gehalten wird, die so eingerichtet sind, dass sie sich in wenigstens einer Richtung parallel zur Formgebungsoberfläche translatorisch bewegen.

3. Verfahren nach einem der Ansprüche 1 bis 2, **dadurch gekennzeichnet, dass** die Faservorform (72, 72') rechte und linke Seitenverlängerungen (76.1, 76.2) aufweist, die auf beiden Seiten des Hauptteils (74) positioniert sind.

4. Verfahren nach einem der Ansprüche 1 bis 3, **dadurch gekennzeichnet, dass** die Formgebungsoberfläche den Verbindungsflächen von Profilen entspricht, die auf einer seitlichen Seite (70.2, 70.3) der Form (56) positioniert sind.

5. Verfahren zur Herstellung eines Flügelmittelkastens (40) mit einer oberen Platte (42), einer unteren Platte (44), einem vorderen Längsträger (46) und einem hinteren Längsträger (48), **dadurch gekennzeichnet, dass** der Flügelmittelkasten (40) aufweist:
- einen ersten Teil (62) mit der oberen Platte (42), dem vorderen und hinteren Längsträger (46, 48) sowie einem ersten und zweiten Flügel (66.1, 66.2), wobei der erste Flügel (66.1) mit dem vorderen Längsträger (46) verbunden ist, ungefähr rechtwinklig zu dem vorderen Längsträger (46) verläuft und diesen in entgegengesetzter Richtung zum hinteren Längsträger (48) verlängert und wobei der zweite Flügel (66.2) mit dem hinteren Längsträger (48) verbunden ist, ungefähr rechtwinklig zu dem hinteren Längsträger (48) verläuft und diesen in entgegengesetzter Richtung zum vorderen Längsträger (46) verlängert, wobei der erste Teil durch das Herstellungsverfahren nach einem der Ansprüche 1 bis 4 erhalten wird,
- einen zweiten Teil (64) mit einer versteiften Platte, die die untere Platte (44) bildet und eine erste und eine zweite Verlängerung (68.1, 68.2) aufweist, die auf beiden Seiten der unteren Platte (44) angeordnet sind, wobei die erste Verlängerung (68.1) mit dem ersten Flügel (66.1) verbunden ist und die zweite Verlängerung (68.2) mit dem zweiten Flügel (66.2) verbunden ist.

6. Flügelmittelkasten, der mit dem Herstellungsverfahren nach dem vorhergehenden Anspruch erhalten wurde.

7. Formwerkzeug zur Durchführung des Herstellungsverfahrens nach einem der Ansprüche 1 bis 4 für wenigstens einen Teil einer Kastenstruktur (40) mit wenigstens einer versteiften Hauptwand (42, 44, 46, 48), die durch wenigstens einen Rand (106, 106') und/oder durch wenigstens eine versteifte Nebenwand (42, 44, 46, 48) verlängert ist, **dadurch gekennzeichnet, dass** das Formwerkzeug aufweist:
- eine Form (56) mit wenigstens einer ersten Seite (70.1, 70.2, 70.3), die wie die versteifte Hauptwand geformt und zum Tragen von Profilen (52, 54) eingerichtet ist,
- wenigstens eine Hauptbacke (78) mit einer Kontaktfläche (F78), die im Wesentlichen parallel zur ersten Seite (70.1) der Form (56) verläuft und so eingerichtet ist, dass sie einen Hauptteil (74) einer Faservorform (72, 72') gegen auf der ersten Seite (70.1) der Form (56) angeordnete Profilstücke gedrückt hält,
- wenigstens eine Nebenbacke (80.1, 80.2, 82.12, 82.2), die so eingerichtet ist, dass sie eine seitliche Verlängerung (76.1, 76.2) der Faservorform (72, 72') gegen eine Formgebungsoberfläche umschlägt und sich in wenigstens einer Richtung parallel zu der Formgebungsoberfläche bewegt.

8. Formwerkzeug nach dem vorhergehenden Anspruch, **dadurch gekennzeichnet, dass** das Formwerkzeug wenigstens ein Paar stromaufwärtige und stromabwärtige Nebenbacken (80.1, 80.2, 82.12, 82.2) aufweist, die so eingerichtet sind, dass sie jeweils eine seitliche Verlängerung (76.1, 76.2) der Faservorform halten und sich in die Richtung parallel zur Formgebungsoberfläche bewegen.

9. Formwerkzeug nach dem vorhergehenden Anspruch, **dadurch gekennzeichnet, dass** die stromaufwärtige und stromabwärtige Nebenbacke (80.1, 82.1, 80.2, 82.2) jeweils eine erste Kontaktfläche (F80.1, F82.1, F80.2, F82.2) aufweisen, wobei die ersten Kontaktflächen der stromaufwärtigen und stromabwärtigen Nebenbacken (80.1, 82.1, 80.2, 82. 2) so eingerichtet sind, dass sie beidseits der Faservorform (72, 72'), im Wesentlichen paarweise parallel zueinander und im rechten Winkel zu einer Seite der Form (56) angeordnet sind, gegen die die seitliche Verlängerung (76.1, 76.2) positioniert werden soll, die durch die stromaufwärtige und stromabwärtige Nebenbacken (80.1, 82.1, 80.2, 82.2) gehalten wird.

10. Formwerkzeug nach dem vorhergehenden Anspruch,
**dadurch gekennzeichnet, dass** jede stromaufwärtige Nebenbacke (80.1, 80.2) eine zweite Kontaktfläche (F80.1', F80.2') aufweist, die zur Form (56) hin gerichtet ist und im Wesentlichen parallel zu der Seite der Form (56) verläuft, gegen die die seitliche Verlängerung (76.1, 76.2) positioniert werden soll, die von den stromaufwärtigen und stromabwärtigen Nebenbacken (80.1, 82.1, 80.2, 82.2) gehalten wird, wobei im Betrieb die zweite Kontaktfläche (F80.1', F80.2') von den Profilen (52, 54), die auf der genannten Seite der Form (56) positioniert sind, um einen Abstand beabstandet ist, der im Wesentlichen gleich der Dicke der Faservorform (72, 72') ist.

11. Formwerkzeug nach dem vorhergehenden Anspruch,
**dadurch gekennzeichnet, dass** jede stromabwärtige Nebenbacke (82.1, 82.2) an ihrer ersten Kontaktfläche (F82.1, F82.2) wenigstens ein Laufband (96) aufweist.

12. Formwerkzeug nach einem der Ansprüche 10 bis 11,
**dadurch gekennzeichnet, dass** jede stromaufwärtige Nebenbacke (80.1, 80.2) an ihrer ersten und/oder zweiten Kontaktfläche (F80.1, F80.2, F80.1', F80.2') wenigstens ein Umlenkband (100) aufweist.

13. Formwerkzeug nach dem vorhergehenden Anspruch,
**dadurch gekennzeichnet, dass** jede stromaufwärtige Nebenbacke (80.1, 80.2) ein Umlenkband (100) aufweist, das zwischen wenigstens drei Schwenkzylindern (102, 102', 102") gespannt ist, die so ausgebildet sind, dass das Umlenkband (100) an der ersten und zweiten Kontaktfläche (F80.1, F80.2, F80.1', F80.2') vorbeigeführt ist.

14. Formwerkzeug nach einem der Ansprüche 8 bis 13,
**dadurch gekennzeichnet, dass** das Werkzeug ein erstes Paar von Nebenbacken (80.1, 82.1) aufweist, die so eingerichtet sind, dass sie mit einer rechten seitlichen Verlängerung (76.1) der Faservorform (72, 72') zusammenwirken, sowie ein zweites Paar Nebenbacken (80.2, 82.2) aufweist, die so eingerichtet sind, dass sie mit einer linken seitlichen Verlängerung (76.2) der Faservorform (72, 72') zusammenwirken.

## Claims

1. Method for manufacturing at least one portion of a box structure (40) comprising at least one stiffened main wall (42, 44, 46, 48) extended by at least one flange (106, 106') and/or by at least one stiffened secondary wall (42, 44, 46, 48), said portion of the box structure (40) being obtained from an outer skin (60) made of a composite material and from a plurality of sections (52, 54) made of a composite material, each having a joining face (F52, F54) in contact with the outer skin (60), said method comprising a step of obtaining the sections (52, 54), a step of positioning said sections (52, 54) on a mold (56) comprising at least a first face (70.1, 70.2, 70.3) on which the sections (52, 54) are positioned, a step of obtaining a flat fiber preform (72, 72', 72", 72‴) having a thickness substantially equal to the outer skin (60), a step of placing a central portion (74) of the fiber preform (72, 72', 72", 72‴) on the sections (52, 54) positioned on the first face (70.1) of the mold (56), the fiber preform (72, 72', 72", 72‴) having at least one lateral extension (76.1, 76.2) extending the central portion (74), a step of forming the lateral extension (76.1, 76.2), a step of placing at least one polymerization covering, at least one polymerization step, and at least one demolding step; **characterized in that**, during the forming step, the main portion (74) is kept pressed against the joining faces of the sections (52, 54) positioned on the first face (70.1) of the mold (56) by at least one main jaw (78) and **in that** the lateral extension (76.1, 76.2) of the fiber preform (72, 72', 72", 72‴) is folded against a forming surface, substantially perpendicular to the first face (70.1) of the mold (56), by means of at least one secondary jaw (80.1, 80.2, 82.1, 82.2) designed to move in translation parallel to the forming surface.

2. Method as claimed in the preceding claim, **characterized in that** during the forming step, the lateral extension (76.1, 76.2) of the fiber preform (72, 72') is held between a pair of secondary jaws (80.1, 80.2, 82.1, 82.2) designed to move in translation in at least one direction parallel to the forming surface.

3. Method as claimed in one of claims 1 to 2, **characterized in that** the fiber preform (72, 72') includes right- and left-hand lateral extensions (76.1, 76.2) positioned on both sides of the main portion (74).

4. Method as claimed in one of claims 1 to 3, **characterized in that** the forming surface corresponds to joining faces of sections positioned on a side face (70.2, 70.3) of the mold (56).

5. Method for manufacturing a central wingbox (40) comprising a top panel (42), a bottom panel (44), a front spar (46) and a rear spar (48), **characterized in that** the central wingbox (40) comprises:
- a first portion (62) comprising the top panel (42), the front and rear spars (46, 48), and the first and second flanges (66.1, 66.2), the first flange (66.1) being connected to the front spar (46), approximately perpendicular to said front spar (46) and extending said front spar in the direction opposite the rear spar (48), the second flange (66.2) being connected to the rear spar (48), approximately perpendicular to said rear spar (48) and extending said rear spar in the direction opposite the front spar (46), said first portion being obtained using the manufacturing method as claimed in one of claims 1 to 4,
- a second portion (64) comprising a stiffened panel shaped like the bottom panel (44) and including first and second extensions (68.1, 68.2) arranged on both sides of the bottom panel (44), the first extension (68.1) being connected to the first flange (66.1), the second extension (68.2) being connected to the second flange (66.2).

6. Central wingbox obtained using the manufacturing method as claimed in the preceding claim.

7. Forming tool for implementing the manufacturing method as claimed in one of claims 1 to 4 for at least one portion of a box structure (40) comprising at least one stiffened main wall (42, 44, 46, 48) extended by at least one flange (106, 106') and/or by at least one stiffened secondary wall (42, 44, 46, 48), **characterized in that** the forming tool comprises:
- a mold (56) having at least a first face (70.1, 70.2, 70.3) shaped like the stiffened main wall and designed to bear sections (52, 54),
- at least one main jaw (78) comprising a contact face (F78) substantially parallel to the first face (70.1) of the mold (56), designed to hold a main portion (74) of a fiber preform (72, 72') pressed against sections positioned on the first face (70.1) of the mold (56),
- at least one secondary jaw (80.1, 80.2, 82.12, 82.2) designed to fold a lateral extension (76.1, 76.2) of the fiber preform (72, 72') against a forming surface and to move in at least one direction parallel to the forming surface.

8. Forming tool as claimed in the preceding claim, **characterized in that** the forming tool comprises at least one pair of upstream and downstream secondary jaws (80.1, 80.2, 82.12, 82.2) each designed to hold a lateral extension (76.1, 76.2) of the fiber preform and to move in the direction parallel to the forming surface.

9. Forming tool as claimed in the preceding claim, **characterized in that** each upstream and downstream secondary jaw (80.1, 82.1, 80.2, 82.2) comprises a first contact face (F80.1, F82.1, F80.2, F82.2), the first contact faces of the upstream and downstream secondary jaws (80.1, 82.1, 80.2, 82.2) being designed to be arranged on both sides of the fiber preform (72, 72'), substantially parallel to each other for each pair and perpendicular to a face of the mold (56) against which the lateral extension (76.1, 76.2) held by the upstream and downstream secondary jaws (80.1, 82.1, 80.2, 82.2) is to be positioned.

10. Tool as claimed in the preceding claim, **characterized in that** each upstream secondary jaw (80.1, 80.2) comprises a second contact face (F80.1', F80.2') oriented towards the mold (56), substantially parallel to the face of the mold (56) against which the lateral extension (76.1, 76.2) held by the upstream and downstream secondary jaws (80.1, 82.1, 80.2, 82.2) is to be positioned, in operation the second contact face (F80.1', F80.2') being spaced apart from the sections (52, 54) positioned on said face of the mold (56) by a distance substantially equal to the thickness of the fiber preform (72, 72').

11. Forming tool as claimed in the preceding claim, **characterized in that** each downstream secondary jaw (82.1, 82.2) has at least one moving belt (96) on the first contact face (F82.1, F82.2) thereof.

12. Forming tool as claimed in one of claims 10 to 11, **characterized in that** each upstream secondary jaw (80.1, 80.2) has at least one moving belt (100) on the first and/or second contact face (F80.1, F80.2, F80.1', F80.2') thereof.

13. Forming tool as claimed in the preceding claim, **characterized in that** each upstream secondary jaw (80.1, 80.2) has a moving belt (100) stretched between at least three pivoting rollers (102, 102', 102") arranged such that the moving belt (100) moves on the first and second contact faces (F80.1, F80.2, F80.1', F80.2').

14. Forming tool as claimed in one of claims 8 to 13, **characterized in that** the tool comprises a first pair of secondary jaws (80.1, 82.1) designed to cooperate with a right-hand lateral extension (76.1) of the fiber preform (72, 72') and a second pair of secondary jaws (80.2, 82.2) designed to cooperate with a left-hand lateral extension (76.2) of the fiber preform (72, 72').
